# EUROPEAN PATENT SPECIFICATION

(11) **EP 3 808 573 B1**
(45) Date of publication and mention of the grant of the patent: **29.09.2021**
(21) Application number: 20201510.3
(22) Date of filing: 13.10.2020
(51) Int. Cl.: B60C 7/14, B60B 1/04, B60B 9/04, B60B 9/26, B60B 15/20, B60B 21/06, B60C 7/18, B60C 7/26

(54) **VARIABLE COMPLIANCE WHEEL COMPRISING TORQUE MEASURING DEVICE**
RAD MIT VARIABLER NACHGIEBIGKEIT MIT DREHMOMENTMESSVORRICHTUNG
ROUE À CONFORMITÉ VARIABLE COMPRENANT UN DISPOSITIF DE MESURE DE COUPLE

(30) Priority: 15.10.2019 GR 20190100460
(43) Date of publication of application: 21.04.2021
(73) Proprietor: HTR SA, 23053 Elafonisos Lakwnias (GR)
(72) Inventor: Papantoniou, Vassilios, 14562 Kifisia (GR)
(74) Representative: Karakatsanis, Georgios

(56) References cited:
- WO-A1-2017/116454
- JP-A- H04 221 201
- KR-A- 20160 120 920
- US-A- 305 769
- US-A- 718 096
- US-A- 1 254 505
- US-A- 1 308 633
- US-A1- 2011 272 254
- US-A1- 2014 345 761
- US-A1- 2019 126 673

## Description

### 1. Field of Invention

The present invention relates to a non-pneumatic tire that can be used without filling it with pressurized air, with the capacity to alter its flexibility during operation as well as to measure the torque generated by or submitted to the wheel axis during operation.

### 2. Description of Related Art

US 6170544 B1 Hottebart Jan.9,2001 refers to a Non-Pneumatic Deformable Wheel

US 2017/0120671 A1 Miles et al. May 4, 2017 refers to Non-Pneumatic Tire with Partially Compliant Hub

US 2018/0072095 A1 Anderfaas et al. Mar.15, 2018 refers to Variable Compliance Wheel

US 8950451 B2 Akihiko Abe Feb.10, 2015 refers to Non-Pneumatic Tire

US 20020096237 A1 Buhroe et al. Jul. 25, 2002 refers to Compliant rim wheel and assembly

US 2009/0211675 A1 Louden B. Aug. 27, 2009 refers to Non-Pneumatic Tyre Assembly

US 2014/0110024 A1 Anderfaas et al. Apr. 24, 2014 refers to Variable Compliance Wheel

US 2016/0193876 A1 Kyo et al. Jul. 7, 2016 refers to Non-Pneumatic Tire

US 2011/0240193 A1 Matsuda et al. Oct. 6, 2011 refers to Non-Pneumatic Tire and Method of Manufacturing Same

US 2009/0033051 A1 Ahnert S. Feb. 5, 2009 refers to Stroller Wheel with Modular Suspension

US 2009/0294000 A1 Cron S.M. Dec. 3, 2009 refers to Variable Stiffness Spoke for a Non-Pneumatic Assembly

US 2016/0016426 A1 Endicott J.M. Jan. 21, 2016 refers to Non-Pneumatic Wheel Assembly with Removable Hub

US 2004/0069385 A1 Timoney et al. Apr. 15, 2004 refers to Wheel

US 2016/0214435 A1 Schaedler et al. Jul. 8, 2016 refers to Wheel Assemblies with Non-Pneumatic Tires

KR 2016 0120920 A discloses a non-pneumatic wheel including a wheel, a hub, and multiple spokes connected and installed between the wheel and the hub, whereby the spokes are formed in an arch shape to have both ends coupled to the wheel while having a center coupled to the hub.

An important number of patents has been deposited in the field of non-pneumatic wheels. Non pneumatic wheels have the advantages of pneumatic tires regarding shock absorption from road irregularities, while avoiding the disadvantages, such as tire failure due to puncturing. In recent years patent applications, as is shown on the list above, a non-pneumatic tire including an attachment body attached to an axle, a ring-shaped body configured to surround the attachment body from the outside in a tire radial direction, and a plurality of connecting members disposed between the attachment body and the ring-shaped body in a tire circumferential direction have been proposed. Additionally in recent years, research has been addressing the use of metallic wheels for planetary exploration, since on planets without or with very thin atmosphere the use of pneumatic tires is impossible, due to the presence of radiation that quickly deteriorates rubber and could render inflated tires useless.

Additionally, the measuring of the torque developed on the wheel axis by an electric motor used for driving the wheel, when a high ratio reduction gearbox is used, represents a technical problem that requires the use of a torque sensor combined with a continuous rotation electrical connection (slip ring), in order to measure the developed torque. This assembly has substantial volume and increased price and mass. The measurement of the torque on the other hand, is important for the safety of the vehicle, especially when the wheel is mounted on unmanned rovers operating in remote areas or on other planets.

### 3. Brief Description of the Invention

The invention consists in a non-pneumatic wheel design that has the possibility to behave like a pneumatic tire, but also modify its radial stiffness by means of a mechanism carried inside the wheel, that is able to operate even when the wheel is in motion, as well as a simple torque sensor solution that can be incorporated in the drive train of the wheel and monitor the torque developed by, or exerted to the wheel during its operation.

### 4. Advancement over the State of Art

The invention proposes a solution to stiffness adjustment of non-pneumatic wheels as well as a solution to durability issues related to elastic materials (metallic, resin etc), used as deformable spokes for non-pneumatic wheels. The invention proposes a specially designed leaf spring element that is tailored for the specific function of stiffness adjustment and presents the desired durability requirements during operation, combined with its specially designed shape that enables the variation of the radial flexibility of the wheel by the counter-rotation of the hub disks holding these springs. In that way, the proposed invention solves both durability issues related to non-pneumatic wheels as well as the issue of regulating wheel stiffness, as a function of road condition and wheel axis load. The invention provides a technically viable simple solution for the regulation of wheel radial stiffness, even when the wheel is in operation, through the motorized counter- rotation of the said hub disks. Finally, the invention proposes a simple and robust solution for measuring the torque developed or exerted on the wheel axis during operation, which is a feature needed for the safety of the operation of unmanned electric vehicles moving on rough terrain, especially if they operate in remote environments or other planets. In such cases, if for example, a wheel becomes blocked, the torque sensor can inform the controller of the vehicle and prevent damage on the motor of the wheel.

### 5. Brief Description of the Drawings

Other objects, features and advantages will occur to those skilled in the art from the following description of a preferred embodiment and the accompanying figures.
Figure 1 presents the two split hubs of the wheel with two spring elements mounted on them, connected to a single tile.
Figure 2 presents the side view of the two split hubs assembly with 3 pairs of springs mounted on them, with the relative angle between the two hubs in relaxed position.
Figure 3 presents the side view of the two split hubs assembly with 3 pairs of springs mounted on them, with the relative angle between the two hubs in preload position.
Figure 4 presents a detail of the spring.
Figure 5 presents the two split hubs of the wheel with the rigid lever that links the first hub and transmits forces to the second hub in disassembled view.
Figure 5.1 presents the assembled hubs with springs as well as the rigid lever linking the hubs.
Figure 5.2 presents the assembled hubs with springs and tiles as well as the rigid lever linking the two hubs.
Figure 6 presents the slip ring used to provide power to the preload mechanism of the springs and the details of the preload mechanism prior to assembly.
Figure 7 presents the fully assembled preload mechanism connected to the rigid lever linking the hubs.
Figure 8 presents the fixed hollow axis of the wheel with the drive motor and internal gear.
Figure 9 presents the isolated drive motor and gearbox assembly as well as the torque measuring system.
Figure 10 presents a rear view of the motor mechanism and torque measuring system
Figure 11 presents the complete wheel assembly.

### 6. Disclosure of a preferred embodiment

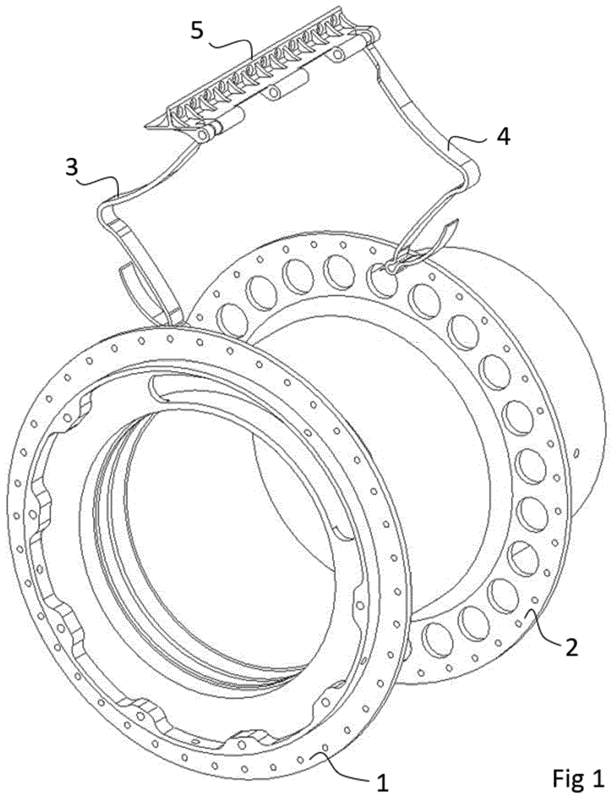

Hereinafter, an embodiment of a non-pneumatic tire according to the present invention will be described with reference to FIGS. 1 to 11.

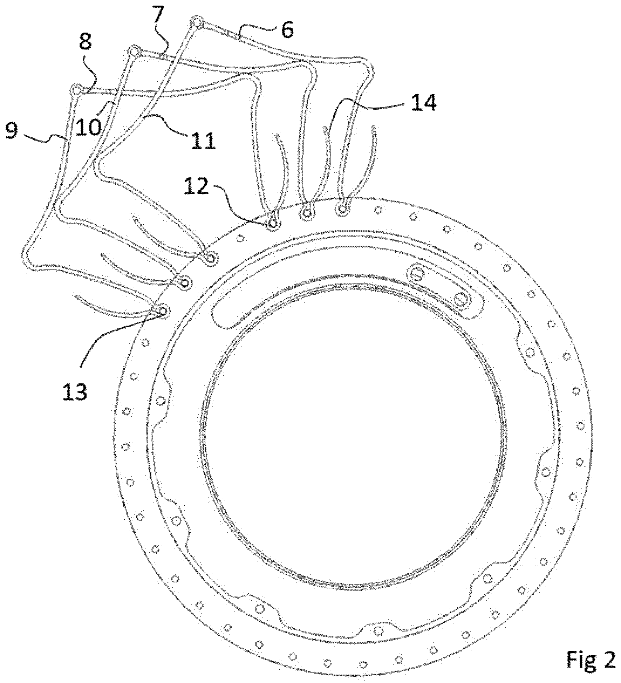

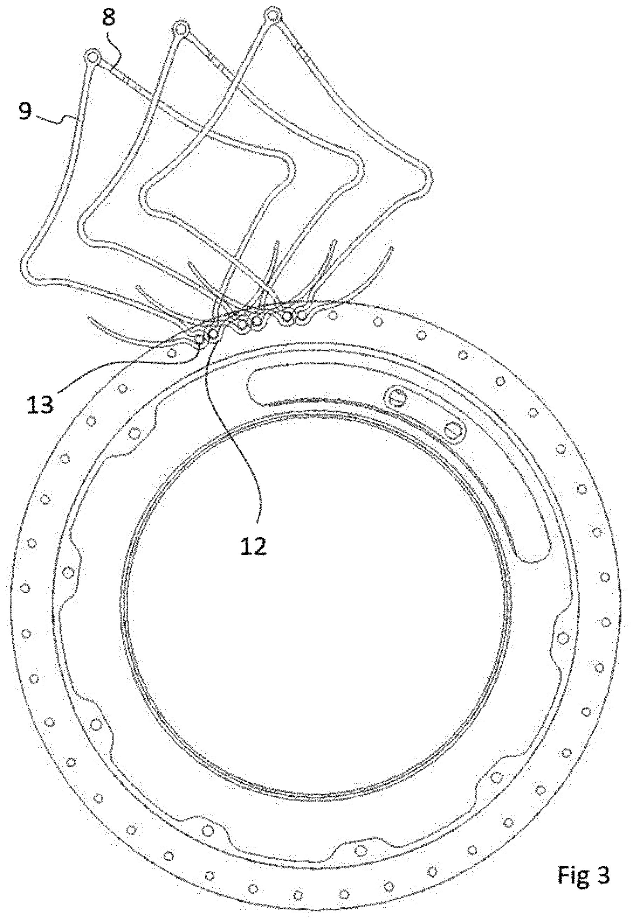

Figure 1 presents the two split hubs of the wheel, split hub 1 and split hub 2, on each one of which a leaf spring 3 and 4 respectively is mounted on one of a plurality of holes of their periphery, by means of a mounting rod. The springs are free to rotate around their mounting rods. Both springs are shown connected to a single tile 5, via also a freely rotating joint that also serves as free rotating joint connecting the tile with its adjacent tiles, thus forming a circular multi-tile caterpillar chain, representing the part of the wheel that enters in contact with the ground. The relative angle between the two split hubs can be modified, in a way to bring closer the mounting points of each spring on their respective hub and also decrease the distance of the concave sections of each of the two springs 3 and 4. To better appreciate the effects of such angle variation, figures 2 and 3 need to be presented.

Figure 2 presents the side view of the same said assembly of the two split hubs, only this time 3 springs numbered 6, 7 and 8 are mounted on 3 adjacent mounting rods of the hub 2 and another 3 springs numbered 9, 10, 11 are mounted on 3 adjacent rods of hub 1, with each pair of said springs connected to 3 adjacent tiles of the wheel periphery (Hubs 1 and 2 are seen from the side). In this figure, the relative angle between hub 1 and hub 2 is in fully relaxed position, with the mounting points 12 and 13 of springs 8 and 9 on their respective hubs being at maximum distance. Also, it can be seen that the curved tails of each spring (for example tail 14 of spring 7) are not in contact with the bodies of their respective adjacent springs (tail 14 is not in contact with the body of spring 6, etc). In this case, a zero pre-load condition exists in all springs. A radial force exerted on a tile, for example the tile supported by springs 8 and 9, generates easily the deformation of the said springs. It must be noted that the wheel assembly in this case is unable to transmit torques to the periphery of the wheel, since the springs rotate freely around their respective joints and in that way the torque is not transmitted. The case is therefore illustrated here as an example of spring condition. This condition can be encountered during the manufacturing of the wheel, but it is avoided during the use of the wheel in operation. During operation, the springs must be at least preloaded at a minimum value, in order to be able to transmit torques to the wheel periphery. This situation is depicted in an exaggerated manner in Figure 3. In Figure 3, the relative angle of the two hubs has been modified by a few degrees. This rotation has brought much closer the mounting points 12 and 13 of springs 8 and 9 respectively. These new positions have forced the tails of each said spring to come in contact with the respective body of the adjacent spring, therefore forcing each said spring element to preload against the corresponding spring of the opposite hub that is connected on the same tile (for example, spring 8 and 9). The generated resulting force from each pair of springs pushes each tile along the radial dimension, in a way to increase the periphery of the wheel. Since the tiles are all interconnected, the periphery of the wheel does not change, but the resulting forces generated by all springs increase the apparent radial stiffness of the wheel, since the deformation of the pre-loaded springs for a given radial load requires now a much higher force. However, in this exaggerated condition where the mounting rods 12 and 13 have come so close to each other, again the wheel hubs cannot transmit important torques to the wheel periphery. A very important torque would again cause the spring pair to rotate instead to cause the wheel to rotate. The ideal preload range condition for each wheel assembly is therefore in middle locations between the location shown in Figure 2 and the location shown in Figure 3 and depends on the individual spring stiffness and the torque we desire to transmit to the wheel. Based on tests performed on a 0.34m diameter wheel, built according to the principles exposed in the present invention, an increase of 4 times of the apparent stiffness can be achieved for a given such wheel for axis loads of the order of 250N. This means that the difference in the hub vertical displacement (overall deformation of the elastic wheel) for a given load placed on the wheel axis, (in the order of 250N), between the "fully preloaded" spring condition and the "minimally preloaded" spring condition, is 400%. In other words, the achieved flexibility variation based on the principle exposed in the present invention can be in the order of 400 % (a minimally preloaded wheel presents a deflection 4 times higher than the deflection of the fully preloaded wheel). The degree of deflection of a wheel is generally important, since it affects the section of the wheel periphery that is in contact with the ground, therefore affecting the ground pressure of the wheel and increasing the traction capacity of the wheel on loose soils etc.

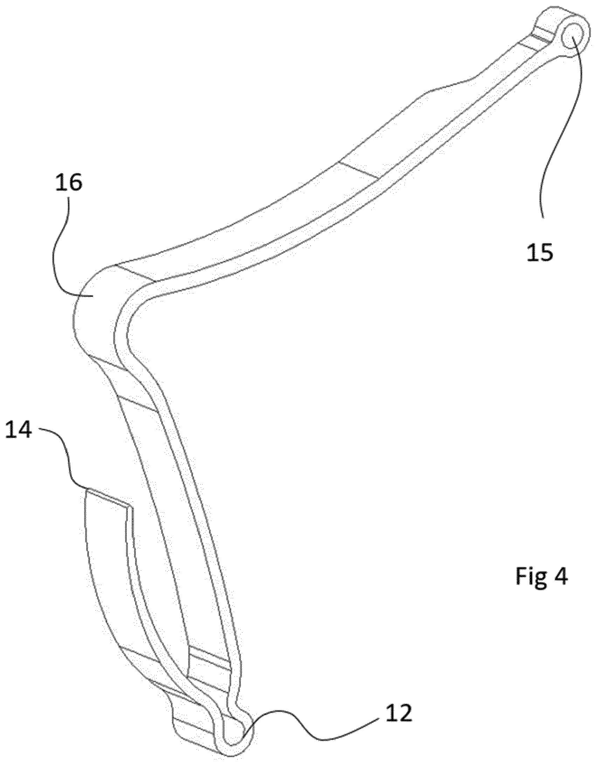

In Fig 4 the preferred embodiment of the spring element is presented. The spring is mounted on the rod of each said hub of the wheel from the adequately shaped curved section 12, which is large enough to permit the free rotation of the spring around the mounting rod but yet the spring cannot disengage from the rod. In a similar manner, the other end of the spring 15 is mounted on the tile articulation, permitting the free rotation of the spring around the fixing rod, yet not allowing the spring to disengage from the rod. The spring also comprises a curved section 16, presenting a concave part and a convex part. The spring further comprises a free curved tail 14, placed at the proximity of the mounting section 12 and in the opposite direction of the concave section of the spring. The role of the tail is depicted in Figure 3 above, showing that in case the two split hubs counter-rotate, the tail is pressed on the next adjacent spring body, preventing the rotation of the springs and contributing to the preload of the springs, generating the increase of stiffness of the wheel.

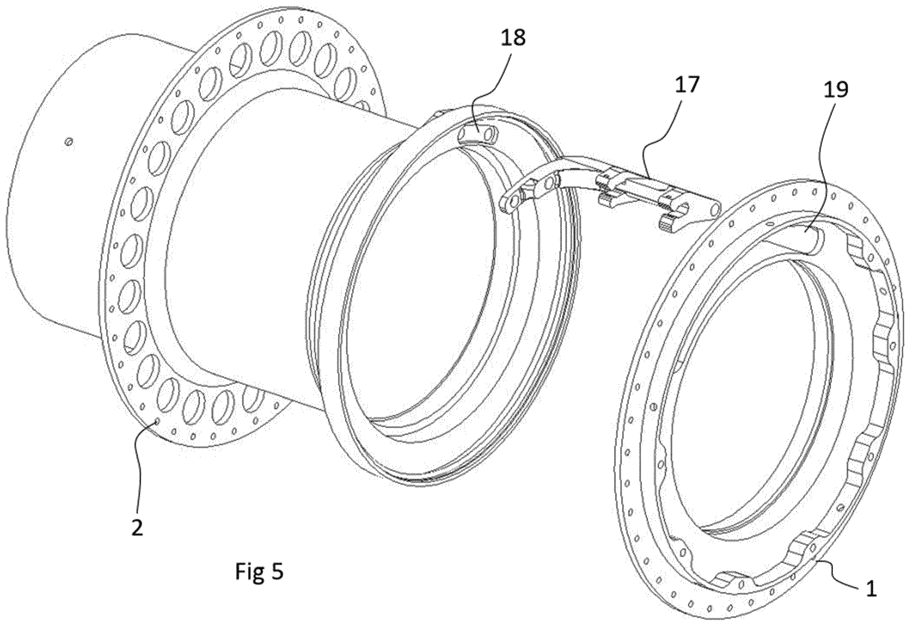

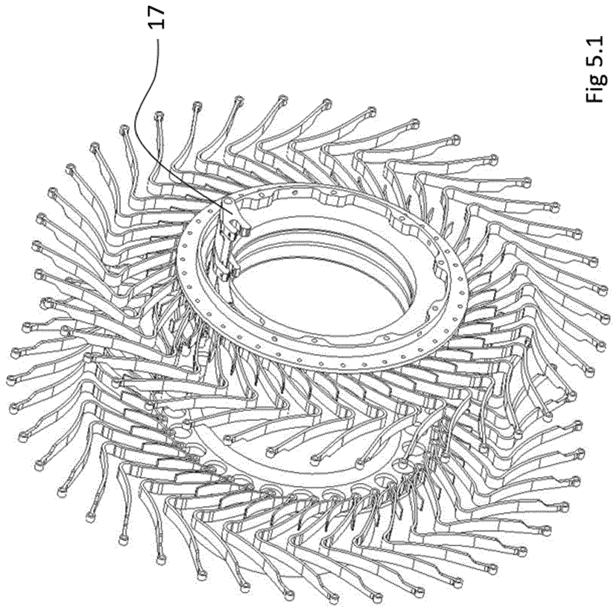

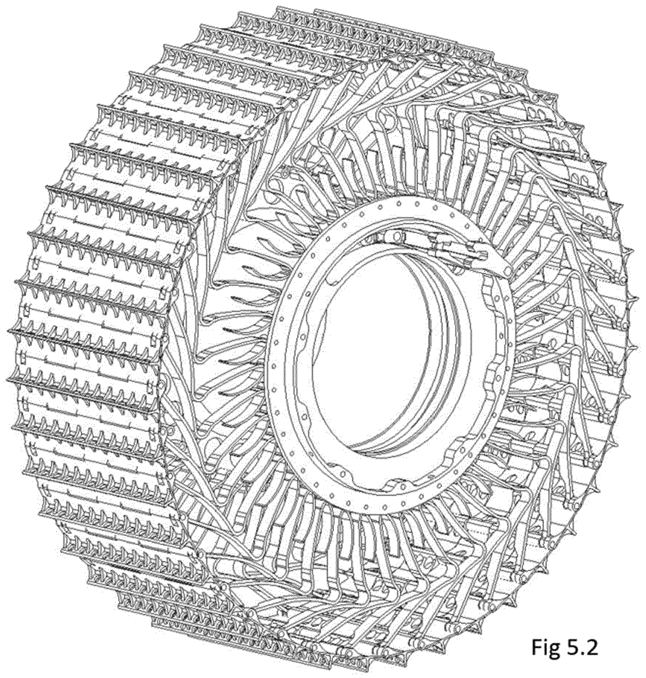

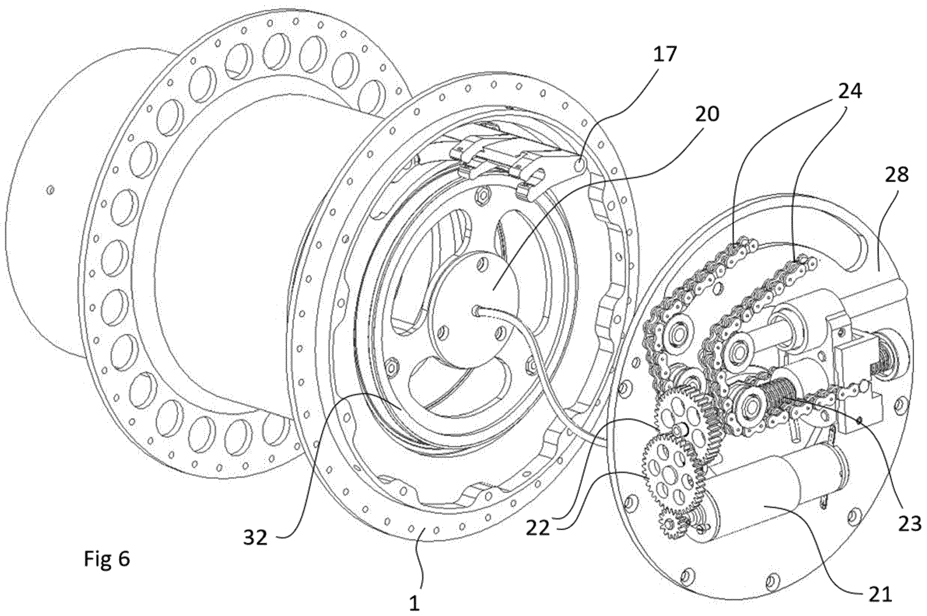

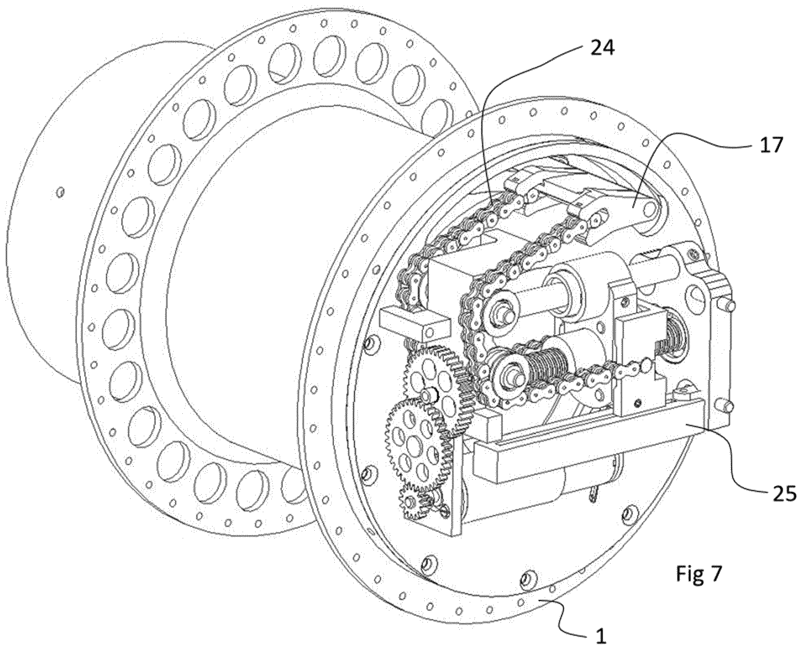

The forces generated by this counter-rotation of the hubs depend on the stiffness of the springs used. For the presented embodiment, the overall wheel stiffness had values varying from 2.5kN/m to 10kN/m, requiring the generation of an important torque for the counter-rotation of the hubs, in the order of 300Nm for the specific embodiment. This torque is a residual constraint between the two hubs and has to be conserved, otherwise the wheel will lose its pre-set stiffness and become more flexible. A strong rigid lever is used in order to transmit this important torque between the two hubs and is shown on Figure 5. In this Figure the two hubs are shown dismantled, for better understanding of the different parts. The rigid lever linking the hubs is part 17, which is permanently fixed on hub 2 through the fixing pad 18, and extents to hub 1 traversing the opening 19 where it engages with the flexibility variation mechanism. Figure 5.1 presents the assembled hubs with all the assembled springs without tiles and the linking lever 17 extending from hub 1. Figure 5.2 presents the assembled hubs with springs and tiles. Figure 6 presents the flexibility variation mechanism, which is mounted on a plate 28 that is fixed on hub 1 and rotates together with the wheel rotation. The plate comprises an electric motor 21, that uses power provided by a continuously rotating electrical connection (slip ring) 20, which is mounted on the central, fixed axis of the wheel 32. The motor 21 engages through spur gears to a supplementary reduction gear-train 22, finally engaging a heavy duty ball-screw drive 23 that pulls a double bicycle-type chain 24, on which lever 17 is attached. By the rotation of the said motor, powered through the slip ring 20, it is possible to develop very important forces on the lever 17, producing the counter rotation of the two hubs and resulting to the increase of the stiffness of the wheel. Figure 7 presents the flexibility variation mechanism assembled and fixed on the side of hub 1, with the double chain 24 mounted on the rigid linking lever 17 and causing its motion relative to the hub 1. Figure 7 also presents a linear potentiometer 25, used to track the position of the tensioning chariot of the ball-screw drive on the screw, in order to enable the exact regulation of the desired stiffness of the wheel during stiffness variation operation. The potentiometer signal is also transmitted through the said slip ring 20 towards a micro-processor based controller that can be used to operate the wheel.

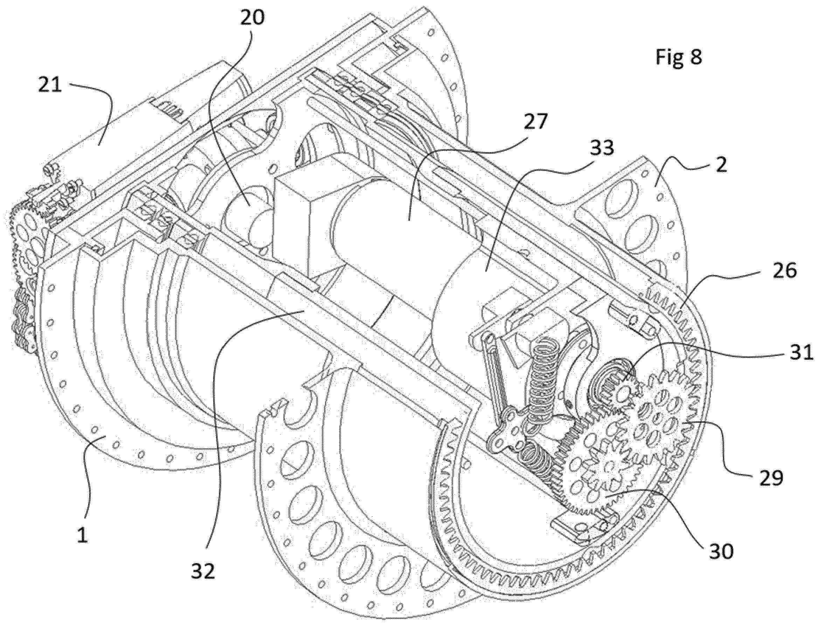

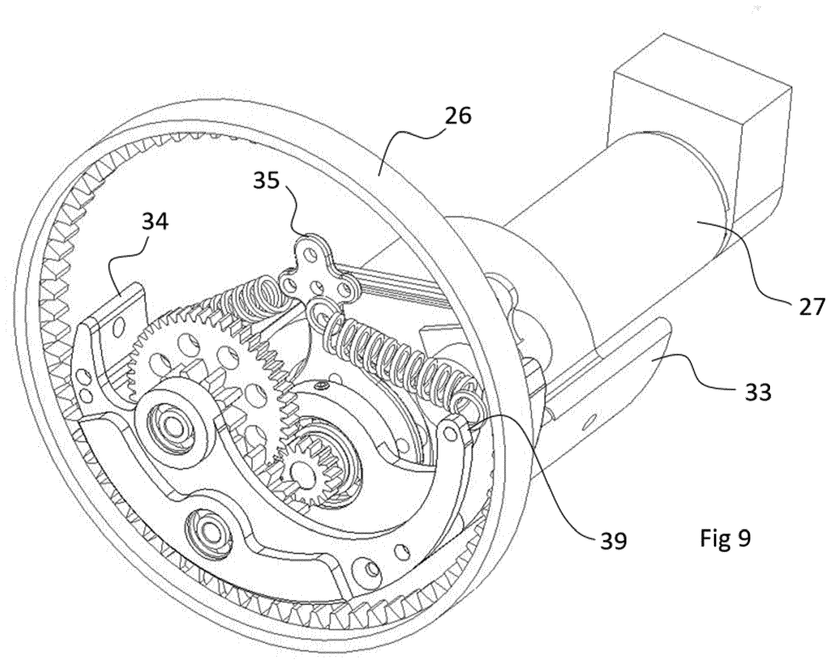

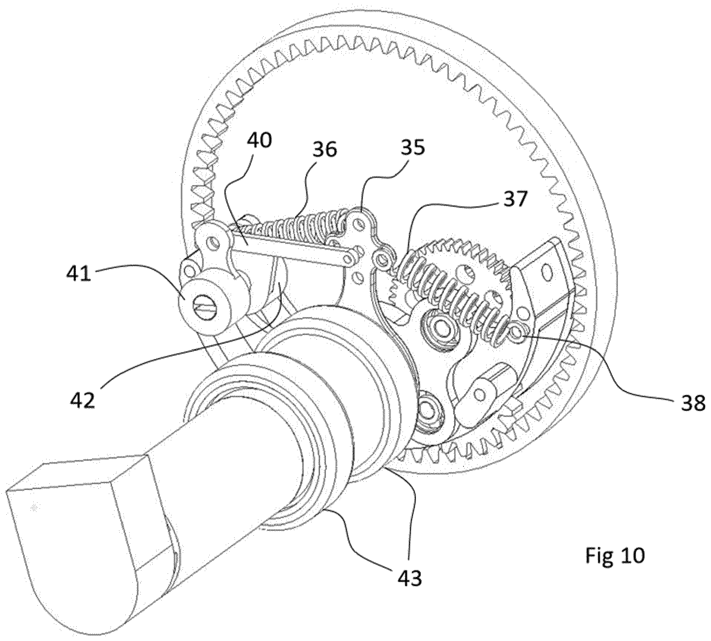

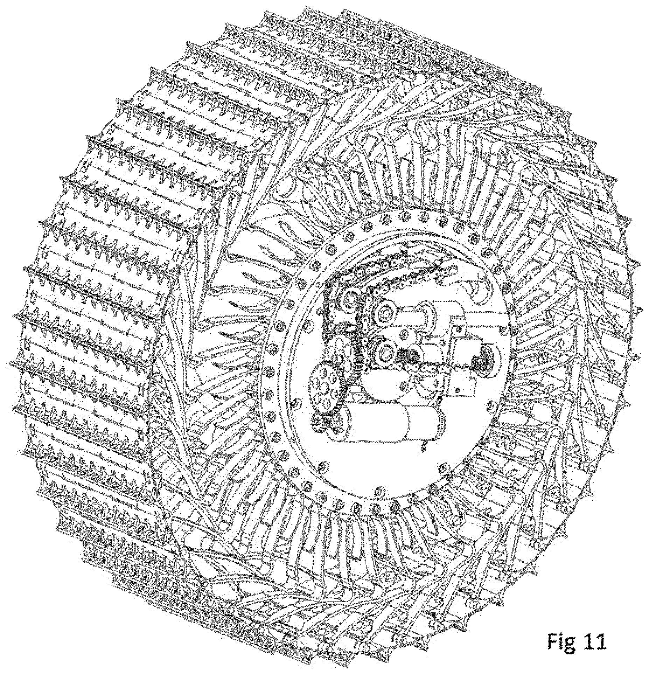

Figure 8 presents a cut along the width-wise part of the wheel assembly, where the split hubs 1 and 2 are visible, the flexibility variation motor 21 is shown on the rear part of the figure, while the slip ring 20 is also shown providing power to the flexibility variation motor. The fixed hollow axis of the wheel 32 is also shown, comprising the drive motor of the wheel 27, which engages through spur gears 31, 30 and 29 the internal gear 26 which is fixed inside hub 2, transmitting driving power for the wheel to rotate. A hollow, circular- shaped part 33 is supporting the drive motor while on the same time it permits to the motor to rotate freely inside it and it is fixed inside the hollow axis 32. The Figure 9 presents in more detail the assembly of the drive-train, with the motor 27 supported longitudinally but free to rotate inside the hollow part 33, with the semi-circular part 39 and 34 supporting the gears and being fixed inside the hollow axis 32 and with the cross-shaped lever 35 being fixed on the front side of the motor 27 and being also able to rotate together with it. Figure 10 presents the assembly view from the other side, with two sliding bearings 43 supporting the free rotation of the motor inside part 33 (not shown in figure 10) and the cross shaped part 35 held in position with the help of two helicoidal springs36 and 37, which have their other extremities fixed on parts 38 and 39 supporting the gear-train and being fixed inside the hollow axis 32. When the motor generates a torque in order to set the wheel in motion, the spur gear 31 engages on the gear train and tends to transmit this torque. By reaction, this same torque is transmitted on the body of the motor 27, which then rotates in the opposite direction, until the forces generated inside the springs 36 and 37 stop the rotation of the body of the motor. The motion of the motor, is transmitted via the cross-shaped lever part 35 and the linkage 40 towards the lever 41, which is fixed on the rotating axle of a rotating potentiometer 42, which is also fixed on part 34 and connected to the inside of the hollow axis 32. In that way, any torque developed by the motor 27 or even generated externally on the wheel and finally transmitted to the motor (even when the motor is un-powered), is measured by the potentiometer. Therefore, the effort generated inside the gear-train 31, 30, 29 and finally transmitted to the internal gear 26, operating the rotation of the wheel, can be monitored with the said potentiometer 42. It must be noted that the accuracy of the torque measurement depends on the non linear Coulomb friction present in the gear train 29 30 31 and 26. The presence of high friction in this gear- train, may alter the precision with which the torque is measured. For best results, the transmission ratio used in the said gear-train should not exceed 30:1, depending on the quality of the gears, type of lubricant used, environmental conditions, contamination etc. The present embodiment has a gear ratio of 20:1, with a capacity to generate and measure torques on the wheel periphery in the order of 30Nm. Figure 11 presents the assembled wheel with springs, tiles and tensioning mechanism.

## Claims

1. A variable compliance non-pneumatic wheel, comprising:
a stationary tubular body (32) attachable to the vehicle chassis and being the axle of rotation of the wheel;
a tubular member forming a hub (1,2), mounted on the stationary tubular body (32) and freely rotating relative to the stationary tubular body (32), comprising a series of mounting rods (12,13) on its periphery on both sides facing the two different width- wise sides of the wheel;
a number of interconnected and freely rotating between each- other caterpillar-like tiles (5);
a plurality of connecting spring members (3,4,6,7,8,9,10,11), each connecting a specific mounting rod (12, 13) of a specific side of the hub (1,2) and a periphery tile on the same wheel width-wise side, mounted between the said tubular hub and the outer tiles body in a circular circumferential direction and configured to connect the hub (1,2) and tile (5) bodies to each other,
**characterized by** the fact that the caterpillar-like tiles (5) form the outer periphery of the wheel and are in contact with the ground during wheel operation and by the fact that the said tubular member forming the hub is split in two parts (1,2), each one of them being free to rotate relative to the other, with each one of them carrying approximately the half number of mounting rods (12,13) and connecting springs (3,4,6,7,8,9,10,11) on its respective width-wise side of the wheel.

2. A variable compliance non-pneumatic wheel according to claim 1, also **characterized by** the fact that the said spring members (3,4,6,7,8,9,10,11) are formed in a curved shape that promotes the bending of the spring along the radial direction of the wheel, when the wheel is loaded along its radius, while on the same time **characterized by** the fact that the said spring members present a substantial width on the width-wise direction of the wheel in order to contribute to the increased stiffness of the wheel along the axial dimension, therefore avoiding the deformation of the wheel along the axial direction.

3. A variable compliance non-pneumatic wheel according to claim 2, also **characterized by** the fact that the said curved spring elements (3,4,6,7,8,9,10,11) are mounted on the first of the two split hubs with the concave side of their curved shape facing always the same circular circumferential direction, also **characterized by** the fact that the facing of the concave side of the curved- shape springs of the second of the two split hubs is opposite to the facing of the concave side of the springs of the first hub, in a way that when viewed from the side of the wheel the concave side of said springs of each of the two said hubs are facing each other.

4. A variable compliance non-pneumatic wheel according to claim 3, also **characterized by** the fact that the said two split hubs(1,2) are able to counter-rotate relative to each other by a few degrees, their counter rotation being in the direction of bringing the concave parts of said springs mounted on each hub of each wheel side closer along the circular circumferential direction, as well as bringing the hub-mounting location of each pair of two said springs attached on the same tile also closer, along the circular circumferential direction.

5. The variable compliance wheel according to claim 4, also **characterized by** the fact that each said spring element (3,6,7,8,9,10,11) is formed by a curved shaped body between its two mounting points as well as a curved tail, that is also part of the spring body but it is formed after its mounting point on the hub, in a way that forces developed on the said main curved body part of the spring come from the said relative displacement of the two mounting points of each spring, which are the mounting rod (12,13) on each said hub (1,2) and a pin on each tile, while forces developed on the tail part of the spring are developed through the contact of the said tail part of each spring with the adjacent main body of the spring located next to it, that said tail part also **characterized by** the fact that it enters in contact with the body of the adjacent spring when the said hubs of the wheel counter-rotate, said tail actually limiting the free rotation of said spring members on the mounting rods of said hub and conducting each pair of said springs that are mounted on the opposite sides of a specific tile to develop forces between them, producing a radial resultant force pushing the tiles outwards in the radial direction and increasing the stiffness of the wheel.

6. The variable compliance wheel according to claim 5 also **characterized by** the fact that the dual tubular members forming the two split hubs (1,2) are connected via a rigid lever (17), originating and fixed on one of said split hubs (2) and arriving to the second of said split hubs (1), with the said second hub having the possibility to rotate relative to the rigid lever for a few degrees, the said rigid lever (17) having a motorized element installed on the second wheel hub (1) that can move the said connecting lever for a few degrees, modifying the relative angle between the two hubs and increasing the contact forces between the curved tail of each said spring and the adjacent body of said next spring mounted on the same side of said split hub, forcing each pair of springs that are mounted on the opposite sides of a specific tile and connected to the same said tile to develop forces between them, producing a radial resultant force pushing the said tile outwards in the radial direction and therefore increasing the stiffness of the wheel.

7. A variable compliance non-pneumatic wheel according to claim 6, also **characterized by** the fact that said motorized element is electric and powered by a continuous rotation electrical connection (slip ring) (20), carrying electrical power and signals from the stationary axle of rotation of the wheel towards the rotating split hubs of the wheel, also **characterized by** the fact that said motorized element comprises an electric motor (21) and a very high reduction gearbox (22), which operates the rotation of a heavy duty ball-screw assembly for the generation of the very important forces needed for wheel stiffness variation, also **characterized by** the fact that said bal-screw assembly finally engages the said rigid lever connecting the split hubs via a bicycle -type chain (24), therefore permitting the generation of very high forces between the two split hubs.

8. The variable compliance wheel according to claim 1, whereas the stationary tubular body (32) attached to the vehicle chassis and being the axle of rotation of the wheel is hollow and comprises a wheel driving electric motor (27), that is engaged via a spur gear to an internal driving gear fixed on one of the two rotating split hubs, **characterized by** the fact that the said wheel driving electric motor is mounted on a freely rotating joint (43) inside the said stationary hollow tubular body forming the wheel axis and is permitted to rotate in this joint by a few degrees; also **characterized by** the fact that this free rotation of a few degrees of the motor is constrained by a pair of springs (36,37), that deform proportionally to the torque developed by said motor (27), in a way that a developed torque by the motor produces the rotation of the entire motor assembly by a few degrees as well as the deformation of said pair of springs (36,37), without necessarily setting the said split hub in motion via the spur gear - internal gear transmission;
also **characterized by** the fact that the said driving motor (27) rotation of a few degrees and said deformation of the spring pair is measured by a classic potentiometer (41) or rotary encoder device, mounted axially on the said driving motor (27) body or is transmitted from the said body of driving motor via a pair of linkages (40) towards the said potentiometer (41) or rotary encoder that translates the developed torque to an electrical signal.

## Patentansprüche

1. Nicht-pneumatisches Rad mit variabler Nachgiebigkeit, umfassend:
einen feststehenden Rohrkörper (32), der am Fahrgestell des Fahrzeugs befestigt werden kann und die Drehachse des Rades bildet;
ein Rohrelement, das eine Nabe (1, 2) bildet, die auf dem feststehenden Rohrkörper (32) montiert ist und relativ zu dem feststehenden Rohrkörper (32) frei drehbar ist, umfassend eine Reihe von Befestigungsstangen (12, 13) an seinem Umfang auf beiden Seiten, die den beiden unterschiedlich breiten Seiten des Rades gegenüberliegen;
eine Reihe miteinander verbundener und frei drehbarer raupenförmiger Platten (5);
mehrere Verbindungsfederelemente (3, 4, 6, 7, 8, 9, 10, 11), die jeweils eine bestimmte Befestigungsstange (12, 13) einer bestimmten Seite der Nabe (1, 2) und eine Umfangsplatte auf derselben Radbreitenseite verbinden, die zwischen der rohrförmigen Nabe und dem äußeren Plattenkörper in einer kreisförmigen Umfangsrichtung angebracht sind und so konfiguriert sind, dass sie die Naben- (1, 2) und Plattenkörper (5) miteinander verbinden,
**dadurch gekennzeichnet, dass** die raupenförmigen Platten (5) den äußeren Umfang des Rades bilden und während des Radbetriebes mit dem Boden in Berührung sind, und dass das die Nabe bildende Rohrelement in zwei Teile (1, 2) geteilt ist, von denen jedes relativ zum anderen frei drehbar ist, wobei jedes von ihnen ungefähr die halbe Anzahl von Befestigungsstangen (12, 13) und Verbindungsfedern (3, 4, 6, 7, 8, 9, 10, 11) an seiner jeweiligen Breitseite des Rades trägt.

2. Nicht-pneumatisches Rad mit variabler Nachgiebigkeit nach Anspruch 1, auch **dadurch gekennzeichnet, dass** die Federelemente (3, 4, 6, 7, 8, 9, 10, 11) in einer gekrümmten Form ausgebildet sind, die die Biegung der Feder entlang der radialen Richtung des Rades fördert, wenn das Rad entlang seines Radius belastet wird, während sie gleichzeitig **dadurch gekennzeichnet sind, dass** die Federelemente eine beträchtliche Breite in Breitenrichtung des Rades aufweisen, um zu einer erhöhten Steifigkeit des Rades entlang der Axialabmessung beizutragen, wodurch die Verformung des Rades entlang der Axialrichtung vermieden wird.

3. Nicht-pneumatisches Rad mit variabler Nachgiebigkeit nach Anspruch 2, auch **dadurch gekennzeichnet, dass** die gekrümmten Federelemente (3, 4, 6, 7, 8, 9, 10, 11) auf der ersten der beiden geteilten Naben montiert sind, wobei die konkave Seite ihrer gekrümmten Form immer in dieselbe kreisförmige Umfangsrichtung weist, auch **dadurch gekennzeichnet, dass** die Ausrichtung der konkaven Seite der gekrümmten Federn der zweiten der beiden geteilten Naben der Ausrichtung der konkaven Seite der Federn der ersten Nabe entgegengesetzt ist, so dass, von der Seite des Rades aus betrachtet, die konkave Seite der Federn jede der beiden Naben einander zugewandt sind.

4. Nicht-pneumatisches Rad mit variabler Nachgiebigkeit nach Anspruch 3, auch **dadurch gekennzeichnet, dass** die beiden geteilten Naben (1, 2) in der Lage sind, sich relativ zueinander um einige Grad zu drehen, wobei ihre Gegendrehung in der Richtung so erfolgt, dass die konkaven Teile der Federn, die an jeder Nabe jeder Radseite angebracht sind, entlang der kreisförmigen Umfangsrichtung näher gebracht werden, sowie dass die Nabenbefestigungsstelle jedes Paares von zwei an derselben Platte angebrachten Federn ebenfalls entlang der kreisförmigen Umfangsrichtung näher gebracht wird.

5. Rad mit variabler Nachgiebigkeit nach Anspruch 4, auch **dadurch gekennzeichnet, dass** jedes Federelement (3, 6, 7, 8, 9, 10, 11) aus einem gekrümmten Körper zwischen seinen beiden Befestigungspunkten sowie einem gekrümmten Ende besteht, das ebenfalls Teil des Federkörpers ist, aber nach seinem Befestigungspunkt an der Nabe ausgebildet ist, so dass die Kräfte, die sich auf den gebogenen Hauptkörper der Feder entwickeln, von der relativen Verschiebung der beiden Befestigungspunkte jeder Feder kommen, die die Befestigungsstange (12, 13) auf jeder Nabe (1, 2) und ein Stift auf jeder Platte sind, während die Kräfte, die auf den hinteren Teil der Feder wirken, durch den Kontakt des hinteren Teils jeder Feder mit dem benachbarten Hauptkörper der Feder, der sich neben ihm befindet, entwickelt werden, wobei der hintere Teil auch **dadurch gekennzeichnet ist, dass** er mit dem Körper der benachbarten Feder in Kontakt kommt, wenn sich die Naben des Rades gegenläufig drehen, wobei das Endstück die freie Drehung der Federelemente auf den Befestigungsstangen der Nabe begrenzt und jedes Paar der Federn, die auf den gegenüberliegenden Seiten einer bestimmten Platte angebracht sind, dazu bringt, Kräfte zwischen ihnen zu entwickeln, die eine radiale resultierende Kraft erzeugen, die die Platten in radialer Richtung nach außen drückt und die Steifigkeit des Rades erhöht.

6. Rad mit variabler Nachgiebigkeit nach Anspruch 5, auch **dadurch gekennzeichnet, dass** die beiden Rohrelemente, die die beiden geteilten Naben (1, 2) bilden, über einen starren Hebel (17) verbunden sind, der von einer der geteilten Naben (2) ausgeht und an der zweiten der geteilten Naben (1) befestigt ist, wobei die zweite Nabe die Möglichkeit aufweist, sich relativ zu dem starren Hebel um einige Grad zu drehen, wobei der starre Hebel (17) ein motorisiertes Element aufweist, das an der zweiten Radnabe (1) installiert ist und den Verbindungshebel um einige Grad bewegen kann, wobei der starre Hebel (17) ein an der zweiten Radnabe (1) angebrachtes motorisiertes Element aufweist, das den Verbindungshebel um einige Grad bewegen kann, wobei der relative Winkel zwischen den beiden Naben verändert und die Kontaktkräfte zwischen dem gebogenen Ende jeder Feder und dem benachbarten Körper der nächsten Feder, die auf derselben Seite der geteilten Nabe angebracht ist, erhöht werden, wodurch jedes Paar Federn, die auf den gegenüberliegenden Seiten einer bestimmten Platte angebracht und mit derselben Platte verbunden sind, gezwungen wird, Kräfte zwischen ihnen zu entwickeln, wodurch eine radiale resultierende Kraft erzeugt wird, die die Platte in radialer Richtung nach außen drückt und somit die Steifigkeit des Rades erhöht.

7. Nicht-pneumatisches Rad mit variabler Nachgiebigkeit nach Anspruch 6, auch **dadurch gekennzeichnet, dass** das motorisierte Element elektrisch ist und durch eine kontinuierlich rotierende elektrische Verbindung (Schleifring) (20) angetrieben wird, die elektrische Energie und Signale von der feststehenden Drehachse des Rades zu den rotierenden geteilten Naben des Rades überträgt, auch **dadurch gekennzeichnet, dass** das motorisierte Element einen Elektromotor (21) und ein Getriebe mit sehr hoher Untersetzung (22) umfasst, das die Drehung einer Schwerlast-Kugelgewindeanordnung für die Erzeugung der sehr wichtigen Kräfte, die für die Veränderung der Radsteifigkeit erforderlich sind, betätigt, auch **dadurch gekennzeichnet, dass** die Kugelgewindeanordnung schließlich in den starren Hebel eingreift, der die geteilten Naben über eine fahrradartige Kette (24) verbindet, wodurch die Erzeugung sehr hoher Kräfte zwischen den beiden geteilten Naben ermöglicht wird.

8. Rad mit variabler Nachgiebigkeit nach Anspruch 1, wobei der feststehende Rohrkörper (32), der am Fahrzeugrahmen befestigt ist und die Drehachse des Rades bildet, hohl ist und einen Elektromotor (27) zum Antrieb des Rades umfasst, der über ein Stirnrad mit einem inneren Antriebsrad in Eingriff steht, das an einer der beiden geteilten Rotationsnaben befestigt ist, **dadurch gekennzeichnet, dass** der Elektromotor zum Antrieb des Rades an einem frei drehbaren Gelenk (43) im Inneren des feststehenden Rohrkörpers, der die Radachse bildet, angebracht ist und sich in diesem Gelenk um einige Grad drehen kann; auch **dadurch gekennzeichnet, dass** diese freie Drehung des Motors um einige Grad durch ein Paar von Federn (36, 37) begrenzt wird, die sich proportional zu dem von dem Motor (27) entwickelten Drehmoment verformen, so dass ein von dem Motor entwickeltes Drehmoment die Drehung der gesamten Motoranordnung um einige Grad sowie die Verformung des Paares von Federn (36, 37) bewirkt, ohne dass die geteilte Nabe notwendigerweise über das Stirnrad-Innenrad-Getriebe in Bewegung gesetzt wird;
auch **dadurch gekennzeichnet, dass** die Drehung des Antriebsmotors (27) um einige Grad und die Verformung des Federpaares durch eine klassische Potentiometer-(41) oder Drehkodiervorrichtung gemessen wird, die axial auf dem Körper des Antriebsmotors (27) montiert ist, oder vom Körper des Antriebsmotors über ein Paar von Verbindungen (40) zum Potentiometer (41) oder Drehkodierer übertragen wird, der das entwickelte Drehmoment in ein elektrisches Signal umwandelt.

## Revendications

1. Roue non pneumatique à compliance variable, comprenant :
un corps tubulaire stationnaire (32) pouvant être fixé au châssis du véhicule et étant l'axe de rotation de la roue ;
un élément tubulaire formant un moyeu (1, 2), monté sur le corps tubulaire stationnaire (32) et tournant de manière libre par rapport au corps tubulaire stationnaire (32), comprenant une série de tiges de montage (12, 13) sur sa périphérie sur les deux côtés faisant face aux deux côtés différents dans le sens de la largeur de la roue ;
un certain nombre de tuiles de type chenille interconnectées et tournant librement entre elles (5) ;
une pluralité d'éléments de ressort de connexion (3, 4, 6, 7, 8, 9, 10, 11), chacun connectant une tige de montage spécifique (12, 13) d'un côté spécifique du moyeu (1, 2) et une tuile de périphérie située sur le même côté dans le sens de la largeur de la roue, montés entre ledit moyeu tubulaire et le corps de tuiles externe dans une direction circonférentielle circulaire et configurés pour relier le moyeu (1, 2) et les corps de tuiles (5) les uns aux autres,
**caractérisée par le fait que** tuiles de type chenille (5) forment la périphérie externe de la roue et sont en contact avec le groupe pendant le fonctionnement de roue et **par le fait que** ledit élément tubulaire formant le moyeu est divisé en deux parties (1, 2), chacune d'elle étant libre de tourner l'une par rapport à l'autre, chacune d'entre elles transportant approximativement la moitié des tiges de montage (12, 13) et des ressorts de connexion (3, 4, 6, 7, 8, 9, 10, 11) sur son côté respectif dans le sens de la largeur de la roue.

2. Roue non pneumatique à compliance variable selon la revendication 1, également **caractérisée par le fait que** lesdits éléments de ressort (3, 4, 6, 7, 8, 9, 10, 11) sont formés selon une forme incurvée qui favorise la flexion du ressort le long de la direction radiale de la, lorsque la roue est chargée le long de son rayon, tout en étant **caractérisée par le fait que** les éléments de ressort présentent une largeur substantielle dans le sens de la largeur de la roue de manière à contribuer à l'augmentation de la rigidité de la roue le long de la dimension axiale, permettant ainsi d'éviter la déformation de la roue le long de la direction axiale.

3. Roue non pneumatique à compliance variable selon la revendication 2, également **caractérisée par le fait que** lesdits éléments de ressort incurvé (3, 4, 6, 7, 8, 9, 10, 11) sont montés sur le premier des deux moyeux divisés avec le côté concave de leur forme incurvée faisant toujours face à la même direction circonférentielle circulaire, également **caractérisée par le fait que** le parement du côté concave des ressorts de forme incurvée du deuxième des deux moyeux divisés est opposé au parement du côté concave des ressorts du premier moyeu, d'une manière telle que lorsqu'ils sont vus du côté de la roue, le côté concave desdits ressorts de chacun desdits deux moyeux se font face l'un avec l'autre.

4. Roue non pneumatique à compliance variable selon la revendication 3, également **caractérisée par le fait que** lesdits deux moyeux divisés (1,2) sont capables de tourner en sens inverse l'un par rapport à l'autre de quelques degrés, l'heure contre rotation étant dans la direction de l'introduction des parties concaves desdits ressorts montés sur chaque moyeu de chaque côté de roue plus proche le long de la direction circonférentielle circulaire, ainsi que l'introduction de l'emplacement de montage de moyeu de chaque paire desdits deux ressorts fixés sur la même tuile également plus proches, le long de la direction circonférentielle.

5. Roue non pneumatique à compliance variable selon la revendication 4, également **caractérisée par le fait que** chacun desdits éléments de ressort (3, 4, 6, 7, 8, 9, 10, 11) est formé par un corps de forme incurvée entre ses deux points de montage ainsi qu'une queue incurvée, qui fait également partie du corps de ressort mais il est formé après son point de montage sur le moyeu, d'une manière telle que les forces développées sur ladite partie de corps incurvé principale du ressort provient dudit déplacement relatif des deux points de montage de chaque ressort, qui sont la tige de montage (12, 13) située sur chacun desdits moyeux (1, 2) et une broche située sur chaque tuile, tandis que les forces développées sur la partie de queue du ressort sont développées par l'intermédiaire du contact de ladite partie de queue de chaque ressort avec le corps principal adjacent du ressort situé à proximité de celui-ci, que ladite partie de queue est également **caractérisée par le fait qu'**elle entre en contact avec le corps du ressort adjacent lorsque lesdits moyeux de la roue tournent en sens inverse, ladite queue limitant actuellement la libre rotation desdits éléments de ressort sur les tiges de montage dudit moyeu et conduisant chaque paires desdits ressorts montés sur les côtés opposés d'une tuile spécifique à développer des forces entre eux, produisant une force résultante radiale poussant les tuiles vers l'extérieur dans la direction radiale et augmentant la rugosité de la roue.

6. Roue non pneumatique à compliance variable selon la revendication 5, également **caractérisée par le fait que** les éléments tubulaires doubles formant les deux moyeux divisés (1, 2) sont connectés par l'intermédiaire d'un levier rigide (17), originaire et fixé sur l'un desdits moyeux divisés (2) et arrivant au deuxième desdits moyeux divisés (1), avec ledit deuxième moyeu ayant la possibilité de tourner par rapport au levier rigide de quelques degrés, ledit levier rigide (17) comportant un élément motorisé installé sur le deuxième moyeu de roue (1) qui peut déplacer ledit levier de connexion de quelques degrés, modifiant l'angle relatif entre les deux moyeux et augmentant les forces de contact entre la queue incurvée de chacun desdits ressorts et le corps adjacent dudit prochain ressort monté sur le même côté dudit moyeux divisé, forçant chaque paire de ressorts qui sont montés sur les côtés opposés d'une tuile spécifique et connectés à ladite même tuile de développer des forces entre eux, produisant une force résultante radiale poussant ladite tuile vers l'extérieur dans la direction radiale et ainsi augmentant la rugosité de la roue .

7. Roue non pneumatique à compliance variable selon la revendication 6, également **caractérisée par le fait que** ledit élément motorisé est électrique et alimenté par une connexion électrique à rotation continue (bague collectrice) (20), transportant de l'énergie électrique et des signaux provenant de l'axe stationnaire de rotation de la roue en direction des moyeux divisés tournant de la roue, également **caractérisée par le fait que** ledit élément motorisé comprend un moteur électrique (21) et une boîte de vitesse à très haute réduction (22), qui actionne la rotation d'un assemblage de vis à billes robuste pour la génération des très importantes forces nécessaires à la variation de rugosité de la roue, également **caractérisée par le fait que** ledit assemblage de vis à billes robuste vient en prise avec ledit levier rigide connectant les moyeux divisés par l'intermédiaire d'une chaîne de type bicyclette (24), permettant ainsi la génération de forces très élevées entre les deux moyeux divisés.

8. Roue non pneumatique à compliance variable selon la revendication 1, tandis que le corps tubulaire stationnaire (32) fixé au châssis de véhicule et étant l'axe de rotation de la roue est creux et comprend un moteur électrique d'entraînement de roue (27), qui vient en prise par l'intermédiaire d'un engrenage droit avec un engrenage d'entraînement interne fixé sur l'un des deux moyeux divisés tournant, également **caractérisée par le fait que** ledit moteur électrique à entraînement de roue est monté sur un joint en libre rotation (43) à l'intérieur dudit corps tubulaire creux stationnaire formant l'axe de roue et est autorisé à tourner dans cette articulation de quelques degrés ; également **caractérisée par le fait que** cette rotation libre de quelques degrés du moteur est limitée par une paire de ressorts (36, 37), qui déforment de manière proportionnelle au couple développé par ledit moteur (27), d'une manière telle qu'un couple développé par le moteur produit la rotation de l'assemblage moteur complet de quelques degrés ainsi que la déformation de ladite paire de ressorts (36, 37), sans nécessairement mettre en mouvement ledit moyeux divisé par l'intermédiaire de la transmission de vitesse interne à engrenage droit ;
également **caractérisée par le fait que** ladite rotation de moteur d'entraînement (27) de quelques degrés et ladite déformation de la paire de ressort est mesurée par un potentiomètre classique (41) ou par un dispositif d'encodeur rotatif monté de manière axiale sur ledit corps de moteur d'entraînement (27) ou est transmise à partir dudit corps de moteur d'entraînement par l'intermédiaire d'une paire de liens (40) en direction dudit potentiomètre (41) ou dudit encodeur rotatif qui traduit le couple développé en un signal électrique.
